# EUROPEAN PATENT APPLICATION

(11) **EP 4 668 847 A1**
(43) Date of publication of application: **24.12.2025**
(21) Application number: 23922686.3
(22) Date of filing: 15.02.2023
(51) Int. Cl.: H04W 28/084, H04W 36/08, H04W 36/10, H04W 36/22, H04W 88/18, H04W 92/24

(54) **MOBILE COMMUNICATION SYSTEM**

(71) Applicant: MITSUBISHI ELECTRIC CORPORATION, Chiyoda-ku Tokyo 100-8310 (JP)
(72) Inventor: MAKINO Shinya, Tokyo 100-8310 (JP); IWAYAMA Naofumi, Tokyo 100-8310 (JP); HASEGAWA Fumiki, Tokyo 100-8310 (JP)
(74) Representative: Mewburn Ellis LLP
(86) International application number: PCT/JP2023/005273
(87) International publication number: WO 2024/171349

(57) **Abstract**

The Source RAN Node (121) notifies an AMF (131) of the initiation of a handover by a UE (110) establishing a session in a first slice when it is necessary for the UE (110) to execute the handover to a Target RAN Node (122). The AMF (131) notifies an SMF (132) of the initiation of the handover by the UE (110) and inquires, to an NSACF (133), whether the Target RAN Node (122) is able to continue the first slice and whether the Target RAN Node (122) is able to register in a second slice different from the first slice. The SMF (132) inquires, to the NSACF (133), whether the Target RAN Node (122) is able to continue the first slice and whether the Target RAN Node (122) is able to establish a session in the second slice.

## Description

### TECHNICAL FIELD

The disclosure relates to a mobile communication system.

### BACKGROUND ART

The 5th generation mobile communication system (5GS) features executing slice control based on a use case to provide a communication service supporting communication characteristics required for the use case.

A user equipment (UE) usually requests a slice type to be required to a network as Requested network slice selection assistance information (NSSAI) on initial connection to the network and the network replies a slice type available on the basis of the request as an Allowed NSSAI to determine the slice type, thereby the slice control is executed.

When a UE moves between registration areas (RAs) and performs a handover, if the first slice type allowed initially to the UE becomes unavailable due to a cause, such as insufficient resources of the core network side in the RA to which the UE moves, the network provides a new second slice type available and is able to continue with the slice control without interruption (see Non-Patent Literature 1, for example).

In 3rd Generation Partnership Project (3GPP) specifications, if the core network side is difficult to continue providing a UE with a first slice on the handover by the UE, a Target radio access network (RAN) Node sends a pass switch request, which is a request for switching the provision of the slice control from the first slice to a second slice, to access and mobility management function (AMF).

### PRIOR ART REFERENCE

### NON-PATENT REFERENCE

Non-Patent Literature 1: 3GPP TR 38.832 V17.0.0, 2021

### SUMMARY OF THE INVENTION

### PROBLEM TO BE SOLVED BY THE INVENTION

However, the 3GPP specifications do not specify any way to let the Target RAN Node know the state of being difficult to continue providing the first slice in the core network side.

Therefore, in the present condition, the Target RAN Node is not able to send to the AMF the pass switch request triggered by the state of being difficult to continue providing the first slice in the core network side, the protocol data unit (PDU) Session is not able to switch to a new PDU Session in the second slice, and the continuation of the slice control is impossible.

Accordingly, an object of one or more aspects of the disclosure is to make it possible to continue with an alternative slice control even when it becomes impossible to provide the currently providing slice control due to a cause, such as insufficient resources of the core network side.

### MEANS OF SOLVING THE PROBLEM

A mobile communication system according to the first aspect of the disclosure includes a first base station; a second base station; an access management unit configured to manage registration in a slice of a mobile terminal to establish a session in the first base station or the second base station; a session management unit configured to manage the session of the mobile terminal in the slice; and a slice-control management unit configured to manage whether the slice is able to control. The first base station notifies the access management unit of initiation of a handover by the mobile terminal when it is necessary for the mobile terminal establishing the session in the first slice to execute the handover to the second base station. The access management unit notifies the session management unit of the initiation of the handover by the mobile terminal, and inquires, to the slice-control management unit, whether the second base station is able to continue the first slice and whether the second base station is able to register in a second slice different from the first slice. The session management unit inquires, to the slice-control management unit, whether the second base station is able to continue the session of the first slice and whether the second base station is able to establish the session of the second slice.

A mobile communication system according to the second aspect of the disclosure includes a first base station; a second base station; a first access management unit configured to manage registration in a slice of a mobile terminal to establish a session in the first base station; a second access management unit configured to manage registration in a slice of the mobile terminal to establish a session in the second base station; a session management unit configured to manage the session of the mobile terminal in the slice; and a slice-control management unit configured to manage whether the slice is able to control. The first base station notifies the first access management unit of initiation of a handover by the mobile terminal when it is necessary for the mobile terminal establishing the session in the first slice to execute the handover to the second base station. The first access management unit notifies the second access management unit of the initiation of the handover by the mobile terminal. The second access management unit notifies the session management unit of the initiation of the mobile terminal, and inquires, to the slice-control management unit, whether the second base station is able to continue the first slice and whether the second base station is able to register in a second slice different from the first slice. The session management unit inquires, to the slice-control management unit, whether the second base station is able to continue the session of the first slice and whether the second base station is able to establish the session of the second slice.

### EFFECTS OF THE INVENTION

According to one or more aspects of the disclosure, it is possible to continue with an alternative slice control even when it becomes impossible to provide the currently providing slice control due to a cause, such as insufficient resources of the core network side.

### BRIEF DESCRIPTION OF THE DRAWINGS

FIG. 1 is a block diagram schematically illustrating a configuration of a mobile communication system according to a first embodiment.
FIG. 2 is a sequence diagram indicating an operation of the mobile communication system according to the first embodiment.
FIG. 3 is a block diagram schematically illustrating a configuration of a mobile communication system according to a second embodiment.
FIG. 4 is a sequence diagram indicating an operation of the mobile communication system according to the second embodiment.

### MODE FOR CARRYING OUT THE INVENTION

### FIRST EMBODIMENT.

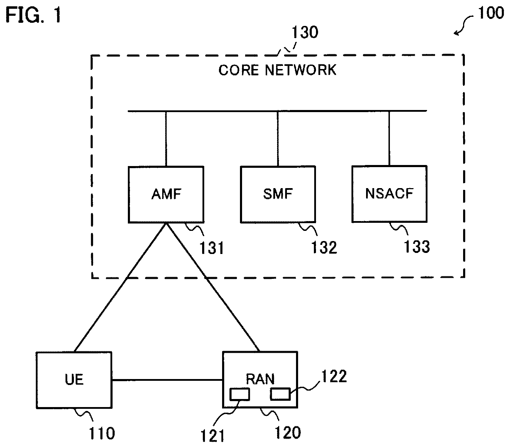

FIG. 1 is a block diagram schematically illustrating a configuration of a mobile communication system 100 according to a first embodiment.

Only elements related to this embodiment are illustrated in FIG. 1 and other elements are omitted from FIG. 1.

The mobile communication system 100 includes a user equipment (UE) 110, a radio access network (RAN) 120, and a core network 130.

The UE 110 is a mobile terminal.

The RAN 120 is a wireless base stations network.

The RAN 120 includes at least a Source RAN Node 121 which the UE 110 is connected to before a handover and a Target RAN Node 122 which is a destination of the handover by the UE 110. Here, the Source RAN Node 121 is also referred to as a connection-source base station or a first base station and the Target RAN Node 122 as a connection-target base station or a second base station.

The core network 130 is a 5G core network.

The core network 130 includes, as part of the function, access management function (AMF) 131, session management function (SMF) 132, and network slice admission control function (NSACF) 133.

The AMF 131 is management function for network access. Here, the AMF 131 functions as an access management unit cooperating with NSACF with respect to registration of a slice type for the UE 110 to access to the Source RAN Node 121 and the Target RAN Node 122.

The SMF 132 is management function for a protocol data unit (PDU) session. Here, the SMF 132 is a session management unit cooperating with NSACF with respect to determination of a slice type during establishing procedure of a session for the UE 110.

The NSACF 133 is management function for admission of slice control. Here, the NSACF 133 functions as a slice control management unit that manages whether slice control is available or not for each type of slice.

In the first embodiment, when the UE 110 establishing a session in the first slice needs to initiate a handover to the Target RAN Node 122, the Source RAN Node 121 notifies the AMF 131 of the initiation of the handover by the UE 110. The AMF 131 notifies the SMF 132 of the initiation of the handover by the UE 110 and inquires, to the NSACF 133, whether the Target RAN Node 122 is able to continue the first slice and whether the Target RAN Node 122 is able to register in a second slice different from the first slice. The SMF 132 inquires, to the NSACF 133, whether the Target RAN Node 122 is able to continue the first slice and whether the Target RAN Node 122 is able to establish the second slice.

The NSACF 133 monitors the number of UEs registered in each slice and the number of sessions in each slice. The NSACF 133 replies to the AMF 131 that the registration in the second slice is allowable when the number of UEs registered in the first slice exceeds a predetermined maximum number and the number of UEs registered in the second slice does not exceed a predetermined maximum number.

The NSACF 133 replies to the SMF 132 that the establishment of a session in the second slice is allowable when the number of sessions in the first slice exceeds a predetermined maximum number and the number of sessions in the second slice does not exceed a predetermined maximum number.

When the AMF 131 receives the reply from the NSACF 133 indicating that the registration in the second slice is allowable, the AMF 131 causes the UE 110 to register in the second slice. When the SMF 132 receives the reply from the NSACF 133 indicating that the establishment of a session in the second slice is allowable, the SMF 132 causes the UE 110 to establish the session in the second slice.

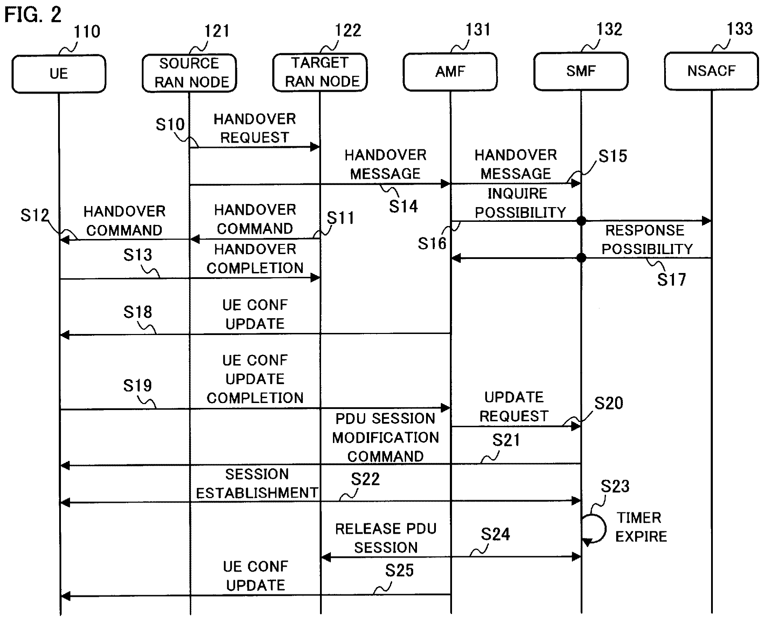

FIG. 2 is a sequence diagram indicating an operation of the mobile communication system 100 according to the first embodiment.

It is assumed that a first slice and a second slice which is an alternative slice of the first slice are previously put on a slice mapping list in the Source RAN Node 121, the Target RAN Node 122, the AMF 131, and the SMF 132. In addition, it is assumed that the UE 110 is registered in the first slice to access a network at initial connection to the network, that a first PDU session, which is a PDU session in the first slice, is established, and that, for example, a session and service continuity mode 3 (SSC mode 3) is set for changing PDU sessions.

If the UE 110 recognizes that it is necessary to perform a handover from the Source RAN Node 121 which the UE 110 is accessing because of the movement between RAs, the Source RAN Node 121 sends a handover request in the first PDU session to the Target RAN Node 122 to which the UE is to move (S10).

Here, the UE 110 performs the handover from the Source RAN Node 121 to the Target RAN Node 122. Specifically, the Target RAN Node 122 sends a handover command to the Source RAN Node 121 (S11). Receiving the command, the Source RAN Node 121 sends the handover command to the UE 110 (S12). The UE 110, which receives the handover command, switches the destination from the Source RAN Node 121 to the Target RAN Node 122 and notifies the Target RAN Node 122 of the completion of the handover (S13). At this time, the first PDU session, which is a PDU session in the first slice, is retained.

If the UE 110 recognizes that it is necessary to perform the handover from the Source RAN Node 121 to which the UE 110 is accessing because of the movement between RAs, the Source RAN Node 121 notifies the AMF 131 of the initiation of the handover in addition to the processing in the step S10 (S14). In response to this notification, the AMF 131 sends this notification to the SMF 132 (S15). Note that the processing of the steps S14 and S15 may be performed before the step S10.

The AMF 131 and the SMF 132 inquire, to the NSACF 133, whether it is able to continue the first slice and whether it is able to provide the second slice (S16).

Specifically, the AMF 131 inquires whether the Target RAN Node which is the destination of the handover is able to register the UE 110 in the first slice and whether the Target RAN Node which is the destination of the handover is able to register the UE 110 in the second slice, and the SMF 132 inquires whether the Target RAN Node which is the destination of the handover is able to establish the first PDU session which is a PDU session in the first slice and whether the Target RAN Node which is the destination of the handover is able to establish the second PDU session which is a PDU session in the second slice.

The NSACF 133 makes responses regarding whether it is able to continue the first slice and whether it is able to provide the second slice (S17).

Specifically, the maximum number of UEs which are possible to register in each slice and the maximum number of PDU sessions which are possible to establish to each slice are set to the NSACF 133. Besides, the NSACF 133 always monitors the number of UEs registered in each slice and the number of PDU sessions established in each slice. Regarding the inquiries concerning the registration in the first slice and the registration in the second slice from the AMF 131 and the inquiries concerning the establishment of the first PDU session and the establishment of the second PDU session from the SMF 132 in the step S16, the NSACF 133 makes responses to the AMF 131 and the SMF 132 depending on whether the monitored number exceeds the maximum number.

Here, the explanation will be provided on the basis of assumption that the AMF 131 and the SMF 132 determine that the Target RAN Node 122 is not able to continue the first slice and the Target RAN Node 122 is able to provide the second slice. In other words, the AMF 131 receives from the NSACF 133 the response indicating that the registration in the first slice is not allowable and the response indicating that the registration in the second slice is allowable, and the SMF 132 receives the response indicating that the establishment of the session in the first slice is not allowable and the response indicating that the establishment of the session in the second slice is allowable.

In this case, the AMF 131 requires the UE 110 to set the first slice and the second slice as Allowed NSSAI by sending UE Configuration Update to the UE 110 (S18).

After the completion of setting the first slice and the second slice, the UE 110 that receives such a requirement notifies the AMF 131 of the completion of setting (S19).

The AMF 131 sends, to the SMF 132, an update request to change PDU sessions by replacing the first slice with the second slice (S20).

The SMF 132 that receives such an update request notifies the UE 110 of the change from the first slice to the second slice with a non-access stratum (NAS) PDU Session Modification Command (S21).

According to this command, the UE 110 establishes the second PDU session, which is a PDU session in the second slice (S22).

When the timer of the SSC mode 3 expires (S23), the SMF 132 releases the PDU session in the first slice (S24).

After this procedure, the AMF 131 executes the setting change of the UE 110 to set only the second slice as an allowed slice by using UE Configuration Update procedure (S25).

The operation indicated above makes it possible to change PDU sessions from the first session to the second session without interruption and to continue the slice control for the UE 110 without interruption.

Note that it is assumed that PDU sessions are changed with the SSC mode 3 in the operation indicated above. However, other procedure may be used for the change of PDU sessions.

### SECOND EMBODIMENT.

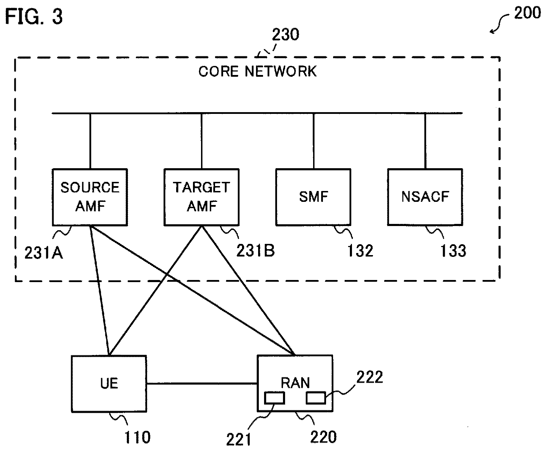

FIG. 3 is a block diagram schematically illustrating a configuration of a mobile communication system 200 according to a second embodiment.

Only elements related to this embodiment are illustrated in FIG. 3 and other elements are omitted from FIG. 3.

The mobile communication system 200 includes a UE 110, a RAN 220, and a core network 230.

The UE 110 included in the mobile communication system 200 according to the second embodiment is the same as the UE 110 included in the mobile communication system 100 according to the first embodiment.

The RAN 220 is a wireless base station network.

The RAN 220 includes at least a Source RAN Node 221 to which the UE 110 is connected before a handover by the UE 110 and a Target RAN Node 222 which is a destination of the handover by the UE 110. Here, the Source RAN Node 221 is also referred to as a connection-source base station or a first base station and the Target RAN Node 222 as a connection-target base station or a second base station.

The core network 230 is a 5G core network.

The core network 230 includes, as part of the function, Source AMF 231A, Target AMF 231B, SMF 132, and NSACF 133.

The SMF 132 and the NSACF 133 included in the core network 230 of the second embodiment are the same as the SMF 132 and the NSACF 133 included in the core network 130 of the first embodiment.

The Source AMF 231A and the Target AMF 231B are both management function for network access.

In the second embodiment, the Source RAN Node 221 is connected to the Source AMF 231A and the Target RAN Node 122 is connected to the Target AMF 231B.

The Source AMF 231A functions as a first access management unit that notifies a handover initiated by the UE 110 accessing the Source RAN Node 221 to the Target AMF 231B to which the UE 110 is to be connected after the handover.

The Target AMF 231B functions as a second access management unit cooperating with NSACF with respect to registration of a slice type of the UE 110 to access to the Target RAN Node 122.

In the second embodiment, when the UE 110 establishing a session in the first slice needs to initiate a handover to the Target RAN Node 222, the Source RAN Node 221 notifies the Source AMF 231A of the initiation of the handover by the UE 110. The Source AMF 231A notifies the Target AMF 231B of the initiation of the handover by the UE 110. The Target AMF 231B notifies the SMF 132 of the initiation of the handover by the UE 110 and inquires, to the NSACF 133, whether the Target RAN Node 222 is able to continue the first slice and whether the Target RAN Node 222 is able to register the UE 110 in a second slice different from the first slice. The SMF 132 inquires, to the NSACF 133, whether the Target RAN Node 222 is able to continue the first slice and whether the Target RAN Node 222 is able to establish a session in the second slice.

The NSACF 133 monitors the number of UEs registered in each slice and the number of sessions in each slice. The NSACF 133 replies to the Target AMF 231B that the registration in the second slice is allowable when the number of UEs registered in the first slice exceeds the predetermined maximum number and the number of UEs registered in the second slice does not exceed the predetermined maximum number.

The NSACF 133 replies to the SMF 132 that the establishment of a session in the second slice is allowable when the number of sessions in the first slice exceeds the predetermined maximum number and the number of sessions in the second slice does not exceed the predetermined maximum number.

When the Target AMF 231B receives the reply from the NSACF 133 indicating that the registration in the second slice is allowable, the Target AMF 231B causes the UE 110 to register in the second slice. When the SMF 132 receives the reply from the NSACF 133 indicating that the establishment of a session in the second slice is allowable, the SMF 132 causes the UE 110 to establish the session in the second slice.

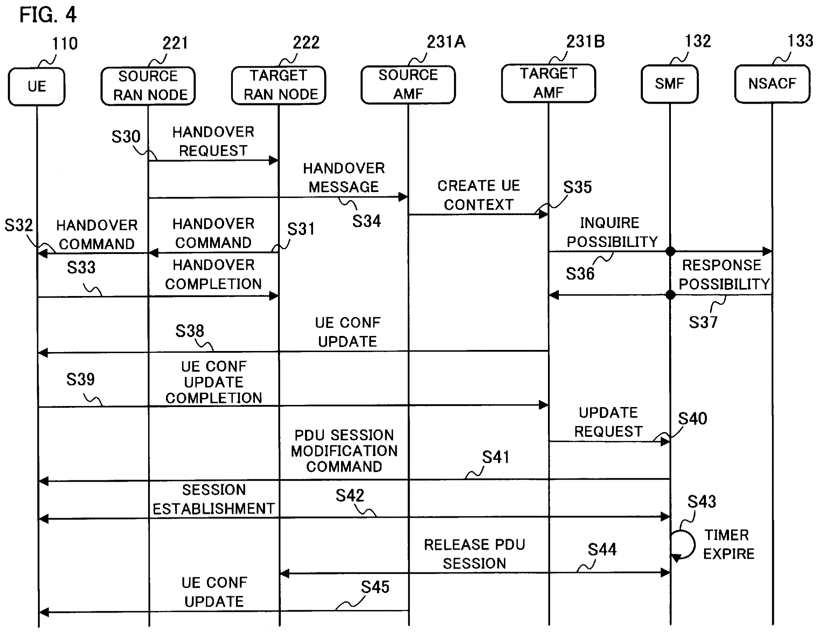

FIG. 4 is a sequence diagram indicating an operation of the mobile communication system 200 according to the second embodiment.

It is assumed that a first slice and a second slice which is an alternative slice of the first slice are previously put on a slice mapping list in the Source RAN Node 221, the Target RAN Node 222, the Source AMF 231A, the Target AMF 231B, and the SMF 132. In addition, it is assumed that the UE 110 is registered in the first slice to access a network at initial connection to the network, that a first PDU session, which is a PDU session in the first slice, is established, and that, for example, a session and service continuity mode 3 (SSC mode 3) is set for changing PDU sessions.

If the UE 110 recognizes that it is necessary to perform a handover because of the movement between RAs, the Source RAN Node 221 sends a handover request in the first PDU session to the Target RAN Node 222 to which the UE 110 is to move (S30).

Here, the UE 110 performs the handover from the Source RAN Node 221 to the Target RAN Node 222. Specifically, the Target RAN Node 222 sends a handover command to the Source RAN Node 221 (S31). Receiving the command, the Source RAN Node 221 sends the handover command to the UE 110 (S32). The UE 110, which receives the handover command, switches the destination from the Source RAN Node 221 to the Target RAN Node 222 and notifies the Target RAN Node 222 of the completion of the handover (S33). At this time, the first PDU session, which is a PDU session in the first slice, is retained.

If the UE 110 recognizes that it is necessary to perform the handover from the Source RAN Node 221 to which the UE 110 is accessing because of the movement between RAs, the Source RAN Node 221 notifies the Source AMF 231A of the initiation of the handover by sending a message in addition to the processing in the step S30 (S34).

The Source AMF 231A, which receives such a message, notifies the Target AMF 231B of the initiation of the handover by the UE 110 by sending a message for requesting to create UE related context information of the UE 110 (S35).

Receiving this message, the Target AMF 231B creates the UE related context information of the UE 110, and the Target AMF 231B and the SMF 132 inquire, to the NSACF 133, whether to be able to continue the first slice and whether to be able to provide the second slice (S36).

Specifically, the Target AMF 231B inquires whether a Target RAN Node which is the destination of the handover is able to register the UE 110 in the first slice and whether the Target RAN Node is able to register the UE 110 in the second slice. The SMF 132 inquires whether the Target RAN Node which is the destination of the handover is able to establish a first PDU session, which is a PDU session in the first slice, and whether the Target RAN Node is able to establish a second PDU session, which is a PDU session in the second slice.

The NSACF 133 makes responses regarding whether it is able to continue the first slice and whether it is able to provide the second slice (S37).

Specifically, the maximum number of UEs which are possible to register in each slice and the maximum number of PDU sessions which are possible to establish to each slice are set to the NSACF 133. Besides, the NSACF 133 always monitors the number of UEs registered in each slice and the number of PDU sessions established in each slice. Regarding the inquiries concerning the registration in the first slice and the registration in the second slice from the Target AMF 231B and the inquiries concerning the establishment of the first PDU session and the establishment of the second PDU session from the SMF 132 in the step S36, the NSACF 133 makes responses to the AMF 131 and the SMF 132 depending on whether the monitored number exceeds the maximum number.

Here, the explanation will be provided on the basis of assumption that the Target AMF 231B and the SMF 132 determine that the Target RAN Node 122 is not able to continue the first slice and the Target RAN Node 122 is able to provide the second slice. In other words, the Target AMF 231B receives from the NSACF 133 the response indicating that the registration in the first slice is not allowable and the response indicating that the registration in the second slice is allowable, and the SMF 132 receives the response indicating that the establishment of the session in the first slice is not allowable and the response indicating that the establishment of the session in the second slice is allowable.

In this case, the Target AMF 231B requires the UE 110 to set the first slice and the second slice as Allowed NSSAI by sending UE Configuration Update to the UE 110 (S38).

After the completion of setting the first slice and the second slice, the UE 110 that receives such a requirement notifies the Target AMF 231B of the completion of setting (S39).

The Target AMF 231B sends, to the SMF 132, an update request to change PDU sessions by replacing the first slice with the second slice (S40).

The SMF 132 that receive such an update request notifies the UE 110 of the change from the first slice to the second slice with a NAS PDU Session Modification Command (S41).

According to this command, the UE 110 establishes the second PDU session, which is a PDU session in the second slice (S42).

When the timer of the SSC mode 3 expires (S43), the SMF 132 releases the PDU session in the first slice (S44).

After this procedure, the Target AMF 231B executes the setting change of the UE 110 to set the second slice only as an allowed slice by using UE Configuration Update procedure (S45).

The operation indicated above makes it possible to change PDU sessions from the first session to the second session without interruption and to continue the slice control for the UE 110 without interruption.

Note that it is assumed that PDU sessions are changed with the SSC mode 3 in the operation indicated above. However, other procedure may be used for the change of PDU sessions.

The AMF 131, the SMF 132, the NSACF 133, the Source AMF 231A, and the Target AMF 231B may be implemented by computers.

Note that, if each of the AMF 131, the SMF 132, the NSACF 133, the Source AMF 231A, and the Target AMF 231B is implemented by a computer, the AMF 131 may be also referred to as an access management device, the SMF 132 may be also referred to as a session management device, the NSACF 133 may be also referred to as a slice management device, the Source AMF 231A may be also referred to as a first access management device, and the Target AMF 231B may be also referred to as a second access management device.

### DESCRIPTION OF REFERENCE CHARACTERS

100, 200: MOBILE COMMUNICATION SYSTEM; 110: UE; 120, 220: RAN; 121, 221: SOURCE RAN NODE; 122, 222: TARGET RAN NODE; 130, 230: CORE NETWORK; 131: AMF; 231A: SOURCE AMF; 231B: TARGET AMF; 132: SMF; 133: NSACF.

## Claims

1. A mobile communication system comprising:
a first base station;
a second base station;
an access management unit configured to manage registration in a slice of a mobile terminal to establish a session in the first base station or the second base station;
a session management unit configured to manage the session of the mobile terminal in the slice; and
a slice-control management unit configured to manage whether the slice is able to control, wherein
the first base station notifies the access management unit of initiation of a handover by the mobile terminal when it is necessary for the mobile terminal establishing the session in the first slice to execute the handover to the second base station;
the access management unit notifies the session management unit of the initiation of the handover by the mobile terminal, and inquires, to the slice-control management unit, whether the second base station is able to continue the first slice and whether the second base station is able to register in a second slice different from the first slice; and
the session management unit inquires, to the slice-control management unit, whether the second base station is able to continue the session of the first slice and whether the second base station is able to establish the session of the second slice.

2. The mobile communication system according to claim 1,
wherein the slice-control management unit monitors a number of mobile terminals registered in each slice and a number of sessions in each slice, replies to the access management unit that the registration in the second slice is allowable when the number of the mobile terminals registered in the first slice exceeds a predetermined maximum number and the number of the mobile terminals registered in the second slice does not exceed a predetermined maximum number, and replies to the session management unit that the establishment of the session in the second slice is allowable when the number of the sessions in the first slice exceeds a predetermined maximum number and the number of the sessions in the second slice does not exceed a predetermined maximum number.

3. The mobile communication system according to claim 2, wherein
the access management unit causes the mobile terminal to register in the second slice when the access management unit receives the reply indicating that the registration in the second slice is allowable from the slice-control management unit; and
the session management unit causes the mobile terminal to establish a session in the second slice when the session management unit receives the reply indicating the establishment of the session in the second slice is allowable from the slice-control management unit.

4. A mobile communication system comprising:
a first base station;
a second base station;
a first access management unit configured to manage registration in a slice of a mobile terminal to establish a session in the first base station;
a second access management unit configured to manage registration in a slice of the mobile terminal to establish a session in the second base station;
a session management unit configured to manage the session of the mobile terminal in the slice; and
a slice-control management unit configured to manage whether the slice is able to control, wherein
the first base station notifies the first access management unit of initiation of a handover by the mobile terminal when it is necessary for the mobile terminal establishing the session in the first slice to execute the handover to the second base station;
the first access management unit notifies the second access management unit of the initiation of the handover by the mobile terminal;
the second access management unit notifies the session management unit of the initiation of the mobile terminal, and inquires, to the slice-control management unit, whether the second base station is able to continue the first slice and whether the second base station is able to register in a second slice different from the first slice; and
the session management unit inquires, to the slice-control management unit, whether the second base station is able to continue the session of the first slice and whether the second base station is able to establish the session of the second slice.

5. The mobile communication system according to claim 4,
wherein the slice-control management unit monitors a number of mobile terminals registered in each slice and a number of sessions in each slice, replies to the second access management unit that the registration in the second slice is allowable when the number of the mobile terminals registered in the first slice exceeds a predetermined maximum number and the number of the mobile terminals registered in the second slice does not exceed a predetermined maximum number, and replies to the session management unit that the establishment of the session in the second slice is allowable when the number of the sessions in the first slice exceeds a predetermined maximum number and the number of the sessions in the second slice does not exceed a predetermined maximum number.

6. The mobile communication system according to claim 5, wherein
the second access management unit causes the mobile terminal to register in the second slice when the second access management unit receives the reply indicating that the registration in the second slice is allowable from the slice-control management unit; and
the session management unit causes the mobile terminal to establish a session in the second slice when the session management unit receives the reply indicating the establishment of the session in the second slice is allowable from the slice-control management unit.
